# EUROPÄISCHE PATENTANMELDUNG

(11) **EP 3 643 392 A1**
(43) Veröffentlichungstag der Anmeldung: **29.04.2020**
(21) Anmeldenummer: 18202788.8
(22) Anmeldetag: 26.10.2018
(51) Int. Cl.: B01D 53/04

(54) **AKTIVKOHLE-ADSORBEREINHEIT UND VERFAHREN ZU DESSEN HERSTELLUNG**

(71) Anmelder: Chemion Logistik GmbH, 51373 Leverkusen (DE)
(72) Erfinder: Henn, Stephan, 51147 Köln (DE)
(74) Vertreter: Michalski Hüttermann & Partner Patentanwälte mbB

(57) **Zusammenfassung**

Die Erfindung betrifft eine Aktivkohle-Adsorbereinheit (10) zur Reinigung von Gasen und/oder Flüssigkeiten bei industriellen Anwendungen mit einem Aktivkohle-Adsorber (12), der eine Aktivkohle-Filtereinheit (18) und ein die Aktivkohle-Filtereinheit einhausendes Gehäuse (20) aufweist und mit einem Gestell (14) zum Aufstellen des Aktivkohle-Adsorbers (12).

Es ist vorgesehen, dass das Gestell (14) als rahmenartiges Transportgestell (16) für den Transport mittels eines Fahrzeugs für den Gütertransport ausgebildet ist, wobei das Transportgestell (16) den Aktivkohle-Adsorber (12) vollständig einfasst.

Die Erfindung betrifft weiterhin ein Verfahren zur Herstellung einer derartigen Aktivkohle-Adsorbereinheit (10).

## Beschreibung

Die Erfindung betrifft eine Aktivkohle-Adsorbereinheit zur Reinigung von Gasen und/oder Flüssigkeiten bei industriellen Anwendungen mit einem Aktivkohle-Adsorber, der eine Aktivkohle-Filtereinheit und ein die Aktivkohle-Filtereinheit einhausendes Gehäuse aufweist und mit einem Gestell zum Aufstellen des Aktivkohle-Adsorbers.

Des Weiteren betrifft die Erfindung ein Verfahren zur Herstellung einer derartigen Aktivkohle-Adsorbereinheit.

Aktivkohle-Adsorbereinheiten für industrielle Anwendungen, z.B. bei Chemie-Unternehmen, weisen in der Regel einen Aktivkohle-Adsorber in Form eines Tanks und ein Gestell zum Aufstellen des Aktivkohle-Adsorbers auf. Diese Anordnung hat dann oftmals die Form eines Silos. Der Aktivkohle-Adsorber umfasst eine Aktivkohle-Filtereinheit mit entsprechendem Aktivkohle-Material und ein die Aktivkohle-Filtereinheit einhausendes Gehäuse. Dieses gibt die tankartige äußere Form vor. Derartige Aktivkohle-Adsorbereinheit werden bei solchen bei industriellen Anwendungen zur Reinigung von Gasen und/oder von Flüssigkeiten genutzt.

Eine mögliche Anwendung ist das Reinigen von Abwässern. Das Aktivkohle-Material im Adsorber muss dabei vor Gebrauch aktiviert und nach Gebrauch neutralisiert werden. Diese Adsorber benötigen hierzu keine Gefahrgutzulassung, da der Betrieb gemäß Druckgeräterichtlinie nur einen CE-geprüften Behälter erfordert. Die Neutralisierung nach Gebrauch führt zu einer Einstufung als nicht gefährliches Transportgut. Das Aktivieren und Neutralisieren ist jedoch zeit- und kostenintensiv.

Die Druckschrift EP 1 997 782 B1 beschreibt einen Adsorber einer Anlage zur Behandlung von mit organischen Verbindungen, wie beispielsweise organischen Säuren, versetztem Abwasser. Der Adsorber enthält als Adsorbens Aktivkohle oder Zeolith und ist über eine Abwasserzuleitung, eine Abwasserentnahmeleitung sowie weitere Leitungen in die Anlage eingebunden.

Aufgabe der Erfindung ist es, eine Aktivkohle-Adsorbereinheit und ein Verfahren zu deren Herstellung anzugeben, die es ermöglichen, den Aktivkohle-Adsorber auf alternative Weise zu betreiben.

Die Lösung der Aufgabe erfolgt erfindungsgemäß durch die Merkmale der unabhängigen Ansprüche. Bevorzugte Ausgestaltungen der Erfindung sind in den Unteransprüchen angegeben, die jeweils für sich genommen oder in beliebiger Kombination miteinander einen Aspekt der Erfindung darstellen können.

Bei der erfindungsgemäßen Aktivkohle-Adsorbereinheit zur Reinigung von Gasen und/oder Flüssigkeiten bei industriellen Anwendungen mit einem Aktivkohle-Adsorber, der eine Aktivkohle-Filtereinheit und ein die Aktivkohle-Filtereinheit einhausendes Gehäuse aufweist und einem Gestell zum Aufstellen des Aktivkohle-Adsorbers, ist vorgesehen, dass das Gestell als rahmenartiges Transportgestell für den Transport mittels eines Fahrzeugs für den Gütertransport ausgebildet ist, wobei das Transportgestell den Aktivkohle-Adsorber vollständig einfasst.

Bei einer derart ausgestalteten Aktivkohle-Adsorbereinheit ist es möglich, eine Gefahrgut-Zulassung zu erhalten. Dazu muss das Gehäuse des Aktivkohle-Adsorbers lediglich entsprechend der üblichen Tanks von Tank-Containern ausgestaltet sein. Eine solche Aktivkohle-Adsorbereinheit kann sowohl als Adsorber/Filter eingesetzt als auch nach Gebrauch per Fahrzeug für den Gütertransport befördert werden. Ein Vor-Ort-Neutralisieren des Aktivkohle-Materials im Adsorber nach Gebrauch kann entfallen. Die komplette Aktivkohle-Adsorbereinheit kann einfach ausgetauscht werden.

Gemäß einer bevorzugten Ausführungsform der Erfindung ist vorgesehen, dass das Transportgestell ein Außenmaß aufweist, das in der ISO-Norm 668 für Frachtcontainer festgelegt ist. Durch diese Maßnahme ist die Eignung für den Transport mittels eines Fahrzeugs für den Gütertransport sichergestellt. ISO-Container sind genormte Großraumbehälter (Seefracht-Container, engl. freight containers) aus Stahl, die ein einfaches und schnelles Verladen, Befördern, Lagern und Entladen von Gütern ermöglichen. Die einschlägigen Normen (zum Beispiel Maße, Halterungen, Stapelbarkeit) wurden koordiniert von der Internationalen Seeschifffahrts-Organisation (IMO) beschlossen und sind in der ISO-Norm 668 festgelegt. Man unterscheidet die folgenden Containerarten: 20' Container, 40' Container, 45' HC Container, 45' PW Container und 53' HC Container.

Mit Vorteil ist weiterhin vorgesehen, dass das Transportgestell sowie das Gehäuse des Aktivkohle-Adsorbers aus einem ISO-Tankcontainer erstellt ist. Bei Tankcontainern (englisch: tanktainer) handelt es sich um einen Tank für flüssige oder gasförmige Stoffe, der in einen Rahmen eingebettet ist, der der Superstructure einer TEU (Twenty-foot Equivalent Unit) oder FEU (Forty foot Equivalent Unit) entspricht. Je nach Transportgut können Kühl-, Heiz- oder Rühraggregate eingebaut sein. Insbesondere bei Stoffen mit hoher Dichte muss das Gesamtgewicht für die Ladeposition im Schiff beziehungsweise das Transportmittel berücksichtigt werden. Tankcontainer erhöhen massiv die Umschlagsgeschwindigkeit gegenüber Tankwagen. Derartige ISO-Tankcontainer werden mit Gefahrgutzulassung angeboten. Durch entsprechende Modifikation bei Ausbau zur Aktivkohle-Adsorbereinheit bleibt diese Gefahrgutzulassung erhalten.

Bei einer weiteren bevorzugten Ausführungsform der Erfindung ist vorgesehen, dass das Gehäuse in seinem Inneren mit einem Korrosionsschutzmittel, insbesondere einem auf Harz basierenden Korrosionsschutzmittel, beschichtet ist. Ein solcher Korrosionsschutz ist für eine Vielzahl von Anwendungen, wie zum Beispiel bei Reinigung von säurehaltigen Abwässern, nötig.

Gemäß noch einer weiteren bevorzugten Ausführungsform der Erfindung ist das Gehäuse mit mindestens einer wiederverschließbaren Öffnung zur Entnahme von Aktivkohle aus der Aktivkohle-Filtereinheit und/oder zur Zufuhr von Aktivkohle in die Aktivkohle-Filtereinheit versehen.

Dabei ist die wiederverschließbare Öffnung oder mindestens eine dieser wiederverschließbaren Öffnungen als sogenanntes Mannloch ausgebildet, hat also eine entsprechende Größe.

Bei einer weiteren Ausgestaltung der Erfindung weist die Aktivkohle-Adsorbereinheit Rohranschlüsse an beiden Endbereichen des sich in einer Längsrichtung des Transportgestells erstreckenden Gehäuses des Aktivkohle-Adsorbers auf.

Gemäß noch einer weiteren Ausgestaltung der Erfindung ist vorgesehen, dass die Aktivkohle-Adsorbereinheit eine in einer Gehäusewand des Gehäuses montierte Berstscheibe sowie ein Sicherheitsventil aufweist.

Schließlich ist mit Vorteil vorgesehen, dass das Gehäuse als zylinderförmiger oder als kapselförmiger Tank ausgestaltet ist.

Bei dem erfindungsgemäßen Verfahren zur Herstellung einer vorstehend genannten Aktivkohle-Adsorbereinheit ist vorgesehen, dass das Transportgestell sowie das Gehäuse des Aktivkohle-Adsorbers von einem ISO-Tankcontainer gebildet wird.

Gemäß einer bevorzugten Ausführungsform des erfindungsgemäßen Verfahrens ist vorgesehen, dass der Tank des ISO-Tankcontainers in seinem Inneren mit einem Korrosionsschutzmittel, insbesondere einem auf Harz basierenden Korrosionsschutzmittel, beschichtet wird.

Bevorzugte Ausführungsformen des erfindungsgemäßen Verfahrens ergeben sich analog zu den vorstehend genannten Maßnahmen bezüglich der Ausführungsformen der erfindungsgemäßen Aktivkohle-Adsorbereinheit.

Nachfolgend wird die Erfindung unter Bezugnahme auf die anliegenden Figuren anhand von bevorzugten Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen:
- Figur 1:: eine schematische Darstellung einer Aktivkohle-Adsorbereinheit zur Reinigung von Gasen und/oder Flüssigkeiten gemäß einer bevorzugten Ausführungsform der Erfindung,
- Figur 2:: eine konkrete Ausgestaltung der Aktivkohle-Adsorbereinheit in einer ersten Ansicht und
- Figur 3:: die konkrete Ausgestaltung der Aktivkohle-Adsorbereinheit der Fig. 2 in einer zweiten Ansicht.

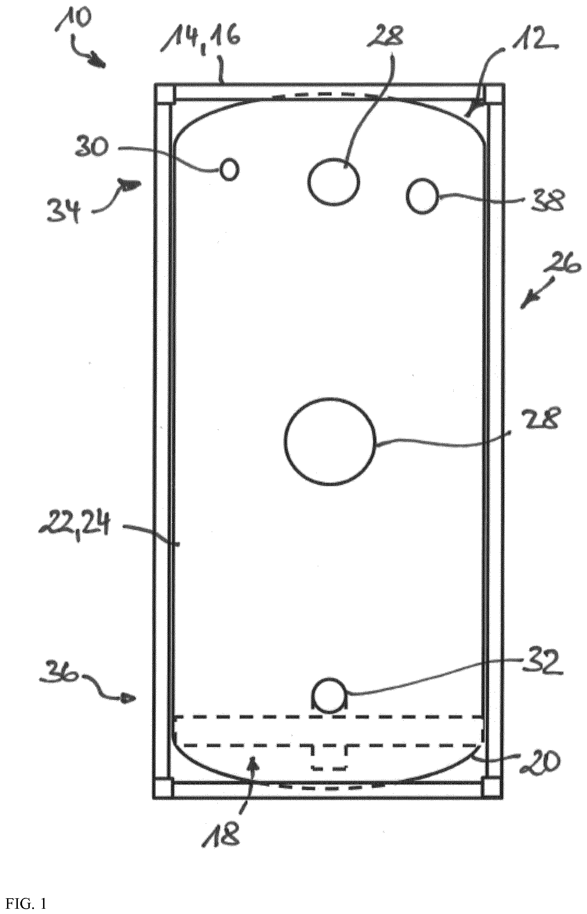

Die Fig. 1 zeigt eine Seitenansicht einer aufgestellten Aktivkohle-Adsorbereinheit 10 zur Reinigung von mit Salzsäure und Toluol belastetem Abwasser bei industriellen Anwendungen. Prinzipiell kann eine solche Aktivkohle-Adsorbereinheit 10 aber auch zur Reinigung von Gasen und/oder anderen Flüssigkeiten genutzt werden. Die Aktivkohle-Adsorbereinheit 10 weist zwei Hauptkomponenten auf: den eigentlichen Aktivkohle Adsorber 12 sowie ein Gestell 14, welches hier dem Aufstellen des Aktivkohle-Adsorbers 12 dient. Das Gestell 14 ist als rahmenartiges Transportgestell 16 für den Transport der Aktivkohle-Adsorbereinheit 10 mittels eines (nicht gezeigten) Fahrzeugs für den Gütertransport ausgebildet. Dabei fasst das Transportgestell 16 den Aktivkohle-Adsorber 12 vollständig ein.

Der Aktivkohle-Adsorber 12 weist als Hauptbaugruppen eine Aktivkohle-Filtereinheit 18 und ein die Aktivkohle-Filtereinheit 18 sowie das (nicht gezeigte) Aktivkohle-Material einhausendes Gehäuse 20 auf. Das Gehäuse 20 wird von einem Tank 22, genauer gesagt einem Edelstahl-Tank 24 gebildet. Das Transportgestell 16 weist ein Außenmaß auf, das in der in der ISO-Norm 668 für Frachtcontainer festgelegt ist. Im gezeigten Fall ist das Transportgestell ein 20' ISO-Rahmen.

Dabei ist das Transportgestell 12 sowie das Gehäuse 20 des Aktivkohle-Adsorbers 12 aus einem ISO-Tankcontainer 26 erstellt, dessen Tank 22 das Gehäuse 20 des Aktivkohle-Adsorbers 12 bildet. Derartige ISO-Tankcontainer 26 werden mit entsprechender Gefahrgutzulassung angeboten, die einen Transport des Aktivkohle-Adsorber 12 per Kipp-Lastkraftwagen (Kipper) oder einem anderen Lastkraftwagen ermöglicht.

Das Gehäuse 20 ist mit mindestens einer wiederverschließbaren Öffnung 28, 28' zur Entnahme von Aktivkohle-Material aus der Aktivkohle-Filtereinheit 18 und/oder zur Zufuhr von Aktivkohle-Material in die Aktivkohle-Filtereinheit 18 versehen. Die größte dieser Öffnungen ist als sogenanntes "Mannloch" ausgebildet, durch das auch die Komponenten der Filtereinheit 18 ins Innere des Gehäuses verbracht wurden. Weiterhin sind Rohranschlüsse 30, 32 an beiden Endbereichen 34, 36 des sich in einer Längsrichtung des Transportgestells erstreckenden Gehäuses 20 des Aktivkohle-Adsorbers 12 vorgesehen. In einer Gehäusewand des Gehäuses 20 ist eine Berstscheibe 38 sowie ein Sicherheitsventil montiert. In seinem Inneren ist das Gehäuse 20 mit einem Korrosionsschutzmittel, insbesondere einem auf Harz basierenden Korrosionsschutzmittel, beschichtet.

Die Aktivkohle-Adsorbereinheit 10 ermöglicht die Beförderung des kontaminierten Aktivkohlematerials als Gefahrgut (seitens Currenta Umwelt mit UN3175, ADR-/RID-Klasse 4.1, Verpackungsgruppe II eingestuft) in dem Gehäuse 20 des Aktivkohle-Adsorbers 12 (ADR: europäisches Übereinkommen über die internationale Beförderung gefährlicher Güter auf der Straße/ RID: internationalen Regelungen zur Beförderung gefährlicher Güter im Schienenverkehr).

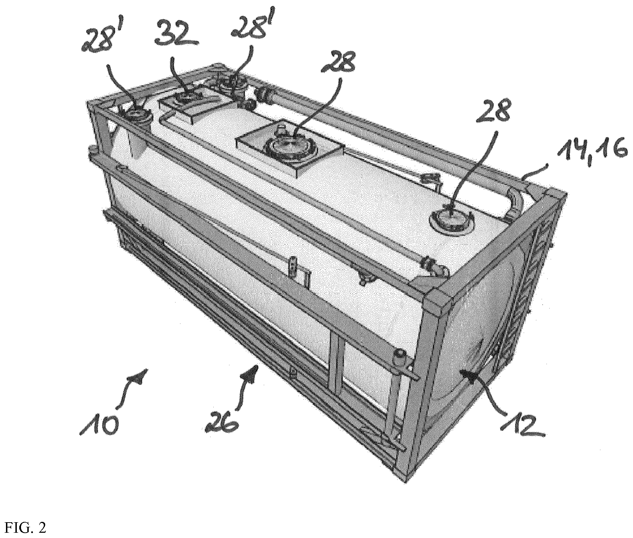

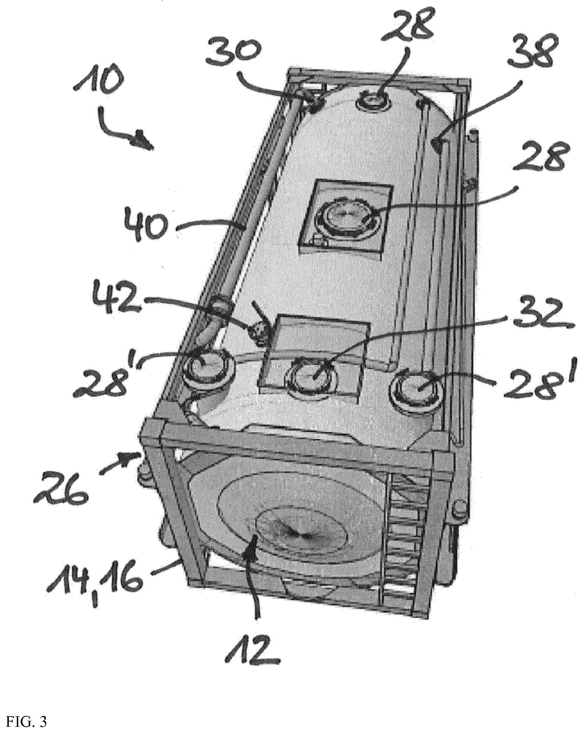

Die Figuren 2 und 3 zeigen nun Ansichten einer konkreten Ausgestaltung der Aktivkohle-Adsorbereinheit 10 in einer Transport-Position. Diese Ausgestaltung entspricht im Wesentlichen der schematische dargestellten Adsorbereinheit 10 der Fig. 1, sodass hier im Weiteren nur auf die Unterschiede eingegangen wird.

Die Fig. 2 zeigt die konkrete Ausgestaltung des Transportgestells 16 als Rahmenkonstruktion, die den Tank 22 sowie die unmittelbaren Anbauten 28, 30, 32 einfasst. Weiterhin sind noch diverse Anschlussleitungen gezeigt.

Die Fig. 3 zeigt die Ausgestaltung der Aktivkohle-Adsorbereinheit 10 in einer anderen Ansicht. Diese zeigt zusätzlich einen Flüssigphase-Zulauf 40 und einen Kugelhahn mit Blindflansch 42.

Es ergeben sich folgende Funktion und folgende Vorteile:

Der zur Aktivkohle-Adsorbereinheit 10 umgebaute Tankcontainer 26 kann sowohl als Adsorber/Filter eingesetzt als auch nach Gebrauch aufgrund der standardisierten ISO Maße als Transportbehälter für den Gütertransport, insbesondere mit Standard-Kippchassis, genutzt werden.

Die während des Transportes liegend beförderte Aktivkohle-Adsorbereinheit 10 wird im Einsatzfall beim Empfänger platzsparend auf den hinteren Teil des rahmenartigen Transportgestells 16 aufgestellt und kann über die nach unten gezogenen Leitungen flurbedient werden.

Die Rückführung des belasteten Aktivkohle-Materials erfolgt ebenfalls waagerecht mittels Kippchassis an den Lieferanten, dort wird die Aktivkohle-Adsorbereinheit 10 wiederum aufgestellt und über seitlichen Seilzugsysteme aufgenommen (dadurch erfolgt eine Drehung um 90°), damit das restliche Aktivkohle-Material dann mittels Förderschnecke aus einer "obenliegenden" wiederverschließbaren Öffnung 28' entnommen werden kann. Das Drehen der Aktivkohle-Adsorbereinheit 10 ermöglicht es, ohne Unten-Entleerungen auszukommen, für die wiederum nach ADR/RID zusätzliche Verschlusseinrichtungen vorzusehen wären.

Prinzipiell ist die erfindungsgemäße Adsorbereinheit bzw. deren Adsorber nicht auf die Adsorbens Aktivkohle beschränkt. Für andere Anwendungen können auch andere Adsorbentien zur Anwendung kommen, wie etwa Aluminiumoxid oder Zeolithe.

## Patentansprüche

1. Aktivkohle-Adsorbereinheit (10) zur Reinigung von Gasen und/oder Flüssigkeiten bei industriellen Anwendungen mit
- einem Aktivkohle-Adsorber (12), der eine Aktivkohle-Filtereinheit (18) und ein die Aktivkohle-Filtereinheit einhausendes Gehäuse (20) aufweist und
- einem Gestell (14) zum Aufstellen des Aktivkohle-Adsorbers (12),
**dadurch gekennzeichnet, dass** das Gestell (14) als rahmenartiges Transportgestell (16) für den Transport mittels eines Fahrzeugs für den Gütertransport ausgebildet ist, wobei das Transportgestell (16) den Aktivkohle-Adsorber (12) vollständig einfasst.

2. Aktivkohle-Adsorbereinheit nach Anspruch 1, **dadurch gekennzeichnet, dass** das Transportgestell (16) ein Außenmaß aufweist, das in der in der ISO-Norm 668 für Frachtcontainer festgelegt ist.

3. Aktivkohle-Adsorbereinheit nach Anspruch 1 oder 2, **dadurch gekennzeichnet, dass** das Transportgestell (12) sowie das Gehäuse (20) des Aktivkohle-Adsorbers aus einem ISO-Tankcontainer (26) erstellt ist.

4. Aktivkohle-Adsorbereinheit nach einem der vorhergehenden Ansprüche, **dadurch gekennzeichnet, dass** das Gehäuse (20) in seinem Inneren mit einem Korrosionsschutzmittel, insbesondere einem auf Harz basierenden Korrosionsschutzmittel, beschichtet ist.

5. Aktivkohle-Adsorbereinheit nach einem der vorhergehenden Ansprüche, **dadurch gekennzeichnet, dass** das Gehäuse (20) mit mindestens einer wiederverschließbaren Öffnung (28, 28') zur Entnahme von Aktivkohle-Material aus der Aktivkohle-Filtereinheit (18) und/oder zur Zufuhr von Aktivkohle-Material in die Aktivkohle-Filtereinheit (18) versehen ist.

6. Aktivkohle-Adsorbereinheit nach einem der vorhergehenden Ansprüche, **gekennzeichnet durch** Rohranschlüsse (30, 32) an beiden Endbereichen (34, 36) des sich in einer Längsrichtung des Transportgestells (16) erstreckenden Gehäuses (20) des Aktivkohle-Adsorbers (12).

7. Aktivkohle-Adsorbereinheit nach einem der vorhergehenden Ansprüche, **gekennzeichnet durch** eine in einer Gehäusewand des Gehäuses (20) montierte Berstscheibe (38) sowie ein Sicherheitsventil.

8. Aktivkohle-Adsorbereinheit nach einem der vorhergehenden Ansprüche, **dadurch gekennzeichnet, dass** das Gehäuse (20) als im Wesentlichen zylinderförmiger oder als im Wesentlichen kapselförmiger Tank (22) ausgestaltet ist.

9. Verfahren zur Herstellung einer Aktivkohle-Adsorbereinheit (10) nach einem der vorhergehenden Ansprüche, wobei das Transportgestell (16) sowie das Gehäuse (20) des Aktivkohle-Adsorbers (12) von einem ISO-Tankcontainer (26) gebildet wird.

10. Verfahren nach Anspruch 9, **dadurch gekennzeichnet, dass** der Tank (22) des Tankcontainers (26) in seinem Inneren mit einem Korrosionsschutzmittel, insbesondere einem auf Harz basierenden Korrosionsschutzmittel, beschichtet wird.
